# EUROPÄISCHE PATENTSCHRIFT

(11) **EP 1 006 088 B1**
(45) Veröffentlichungstag und Bekanntmachung des Hinweises auf die Patenterteilung: **11.08.2004**
(21) Anmeldenummer: 99123644.9
(22) Anmeldetag: 27.11.1999
(51) Int. Cl.: C03C 3/064, C03C 3/066, C03C 8/02, C03C 8/04, C03C 8/14, C03C 8/22, C03C 17/04

(54) **Bleifreie, alkalimetallfreie Glaszusammensetzungen**
Lead and alkali metal free glass compositions
Compositions de verre sans plomb et métaux alcalins

(30) Priorität: 04.12.1998 US 205287
(43) Veröffentlichungstag der Anmeldung: 07.06.2000
(73) Patentinhaber: Ferro GmbH, 60327 Frankfurt (DE)
(72) Erfinder: Sakoske, George E., Washington PA 15301-3514 (US)
(74) Vertreter: Reinhardt, Markus, Dipl.-Ing.

(56) Entgegenhaltungen:
- US-A- 3 988 498
- US-A- 5 378 408
- US-A- 5 714 420
- US-A- 5 753 571
- PATENT ABSTRACTS OF JAPAN vol. 1998, no. 02, 30. Januar 1998 (1998-01-30) -& JP 09 278483 A (NIPPON ELECTRIC GLASS CO LTD), 28. Oktober 1997 (1997-10-28)

## Beschreibung

Diese Erfindung betrifft bleifreie, alkalimetallfreie Glaszusammensetzungen, Glasemailzusammensetzungen und Emailpastenzusammensetzungen, die diese enthalten, sowie Glas- und Keramiksubstrate, die mit diesen Emailpastenzusammensetzungen beschichtet sind.

Bleifreie Glaszusammensetzungen, die bei niedriger Temperatur schmelzen, sind in der Fachwelt bekannt. Diese Gläser sind umweltfreundlich und Fritten, die aus diesen Gläsern erhalten wurden, sind zur Herstellung von Glasemailpastenzusammensetzungen geeignet, die auf Glas oder Keramiksubstraten beschichtet und eingeschmolzen werden können, um dekorativen Glanz sowie funktionale Beschichtungen auf diesen Substraten zur Verfügung zu stellen. Beispiele dieser Glasemailpastenzusammensetzungen sind jene, welche als Beschichtung für Auto- und Konstruktionsgläser verwendet werden. Die Zusammensetzung dieser bleifreien Glaszusammensetzungen ist kritisch hinsichtlich der Leistungsfähigkeit von niedrig schmelzenden Glasfritten, die hieraus hergestellt werden.

Auf die Glaszusammensetzungen in den US-Patentanmeldungen Serial Number 09/066 533 und 09/066 534, beide am 27. April 1998 hinterlegt, und Serial Number 08/908 953, hinterlegt am 8. August 1997, kann Bezug genommen werden. Besondere Aufmerksamkeit kann darüber hinaus dem folgenden geschenkt werden:
US-Patent Nr. 4 554 258,
US-Patent Nr. 4 892 847,
US-Patent Nr. 5 252 521,
US-Patent Nr. 5 326 591,
US-Patent Nr. 4 970 178,
US-Patent Nr. 5 308 803,
US-Patent Nr. 5 629 247,
US-Patent Nr. 5 093 285,
US-Patent Nr. 5 203 902,
EP-A Nr. 0 370 683,
GB Nr. 2 301 100 A,
US-Patent Nr. 5 559 059 und Nr. 5 616 417.

Weitere Beispiele für Patentveröffentlichungen, welche bleifreie Glaszusammensetzungen offenbaren, sind die folgenden:
US-Patent Nr. 4 446 241,
US-Patent Nr. 4 537 862,
US-Patent Nr. 4 224 074,
US-Patent Nr. 4 312 951,
US-Patent Nr. 4 376 169,
US-Patent Nr. 5 504 045,
US-Patent Nr. 5 578 533 und
Internationale Anmeldung Nr. PCT/EP 94/00403.

Schließlich können die folgenden Patentveröffentlichungen erwähnt werden:
US-Patent Nr. 5 643 636,
US-Patent Nr. 5 244 848,
US-Patent Nr. 5 733 828 und
Japanische Patentveröffentlichung Nr. 9-268026.

Alle in diesen Patentveröffentlichungen und schwebenden Anmeldungen offenbarten Glaszusammensetzungen unterscheiden sich in gewissen kritischen Punkten von den neuen Zusammensetzungen, die hierin offenbart werden.

Die vorliegende Erfindung stellt gewisse neue und zweckmäßige Glaszusammensetzungen zur Verfugung, welche bleifrei und alkalimetallfrei sind, und die zweckmäßige Eigenschaften zur Verfügung stellen, welche sie besonders nützlich zur Formulierung von Glasemailzusammensetzungen und Emailpastenzusammensetzungen für das Aufbringen auf Glas- und Keramiksubstrate machen, wie z. B. auf Gläser für Automobile und Konstruktionsgläser. Aufgrund ihrer elektrischen Eigenschaften werden sie aber darüber hinaus auch Verwendung in sich entwickelnden Absatzmärkten für Gläser finden, wie beispielsweise zur Herstellung von Plasmabildschirmen (plasma display panels; PDP) oder anderen Flachbildschirmen. Die neuen Gläser können darüber hinaus in anderen Herstellverfahren für elektronische Gläser Verwendung finden, wie beispielsweise als Dichtmittel und als Halbleiter.

Es wird dementsprechend erwartet, daß ein prinzipielles Anwendungsgebiet dieser Gläser in der PDP-Fertigung liegt, wobei diese als Grundierung oder als Sperrschicht und zur Bildung von Stegstrukturen auf den Bildschirmpaneelen verwendet werden. Hierbei wird beispielsweise auf das US-Patent Nr. 5 647 634 verwiesen. Die Vorteile dieser Glaschemikalien sind ihre niedrigen Schmelztemperaturen und ihre geringen thermischen Expansions-/Kontraktionskoeffizienten speziell für Verschmelzungen auf Glassubstraten. Besonders wünschenswert sollten auch die elektrischen Eigenschaften dieser Gläser sein. Die Abwesenheit von Alkalimetallionen in der Zusammensetzung sollte eine sehr geringe Leitfähigkeit und sehr hohe Durchschlagsspannungen zur Verfügung stellen. Des weiteren ist von Bismut bekannt, daß es einen sehr hohen Widerstand und den höchsten Halleffekt von allen Metallen (vergleiche CRC Handbook of Chemistry and Physics, 57. Ausgabe) hat. Alle diese Merkmale sollten zu extrem wünschenswerten elektrischen Eigenschaften führen.

Von den Glaszusammensetzungen der vorliegenden Erfindung wird angenommen, daß sie exzellente/überragende elektrische Eigenschaften, chemische Haltbarkeit, breite Einbrenntemperaturbereiche, eine geringe Spannung und eine geringe Ausdehnung aufweisen. Beispielsweise haben bestimmte Gläser Expansionseigenschaften im Bereich von 64 bis 90 x 10⁻⁷/°C.

Die Glaszusammensetzungen der Erfindungen sind bleifreie Bismutborosilicatglassysteme, die ohne Verwendung von Alkalimetallionen formuliert sind, und zeigen die folgenden Zusammensetzungsbereiche:

| Oxidkomponente | Weiter Bereich (Gew.-%) | Bevorzugter Bereich (Gew.-%) | Besonders bevorzugter Bereich (Gew.-%) | zusätzlicher Bereich mit hohem Bismutgehalt (Gew.-%) |
|---|---|---|---|---|
| Bi₂O₃ | 50-90 | 67-84 | 68-84 | 78-88 |
| SiO₂ | 5-20 | 6-17 | 7-14 | 6,5-11 |
| B₂O₃ | 2-9 | 3-9 | 3,5-8,7 | 4-8,5 |
| Al₂O₃ | 0,1-10 | 1-9 | 1-8 | 0,1-7 |
| TiO₂ | 0-8 | 0-3 | 0-2 | 0-2 |
| ZnO | 0-9 | 0-8 | 0-6 | 0-6 |
| ZrO₂ | 0-10 | 0,1-7 | 0,5-3 | 0-3 |
| F⁻¹ | 0,2-4 | 0,2-3 | 0,2-2 | 0,2-2 |
| SrO | bis zu 10 | | | |
| CaO | bis zu 7 | | | |
| MgO | bis zu 7 | | | |
| CeO | bis zu 10 | | | |
| MnO | bis zu 10 | | | |
| SnO | bis zu 10 | | | |
| P₂O₅ | bis zu 7 | | | |
| Sb₂O₃ | bis zu 10 | | | |
| Fe₂O₃ | bis zu 10 | | | |
| Nb₂O₅ | bis zu 10 | | | |

Bemerkenswert ist, daß die Zusammensetzungen 0,1 bis 10 Gew.-% Al₂O₃ enthalten. Es wird angenommen, daß dies einen Vorteil der Zusammensetzungen hinsichtlich der Verminderung von Hitzebeständigkeitskorrosion während des Schmelzverfahrens darstellt.

Zusammensetzungen, welche Fluor in einer Menge von 0,2 bis 4,0 Gew.-% enthalten, weisen besonders wünschenswerte Eigenschaften auf.

Es ist bekannt, daß gewisse konventionelle Glaszusammensetzungen relativ große Mengen an BaO und SrO (vergleiche JP-Patentveröffentlichung Nr. 9-268026) benötigen. Dies führt zu Gläsern mit sehr hohen Expansionen, welche nicht für Natronkalkglas oder Materialien mit ähnlichen Ausdehnungskoeffizienten geeignet sind, falls der B₂O₃-Gehalt innerhalb der Bereiche von Zusammensetzungen dieser Erfindung liegt. Vorzugsweise übersteigt der SrO-Gehalt in den Zusammensetzungen der vorliegenden Erfindung 5 Gew.-% nicht.

Die erfindungsgemäßen Glaszusammensetzungen zeigen exzellente bis herausragende thermische Ausdehnungseigenschaften für das Einschmelzen (sealing) auf ein Glassubstrat, exzellente bis herausragende niedrige Einschmelztemperaturen oder Aufbringtemperaturen von etwa 535 bis 600 °C, so daß keine Verformung des Glassubstrats auftritt, gute chemische Haltbarkeit und noch bedeutender, von diesen alkalimetallfreien Zusammensetzungen wird angenommen, daß sie exzellente bis herausragende elektrische Eigenschaften haben.

Die Glaszusammensetzungen werden auf bekannte Weise, wie beispielsweise Mischen der bekannten Ausgangsmaterialien und Schmelzen bei Temperaturen von etwa 1000 bis 1300 °C für etwa 40 Minuten gebildet, um ein geschmolzenes Glas mit der gewünschten Zusammensetzung zu bilden. Das gebildete, geschmolzene Glas kann anschließend abgeschreckt werden, beispielsweise mit Wasser schockgekühlt werden, um auf eine bekannte Weise eine Fritte zu bilden. Die Fritte kann anschließend unter Verwendung von herkömmlichen Mahltechniken zu einer feinen Korngröße, vorzugsweise zwischen 2 bis 6 Mikron, gemahlen werden.

Die Glasfrittenkomponente kann eine einzelne Zusammensetzung der vorliegenden Erfindung sein oder alternativ kann sie auch eine Mischung aus diesen Fritten darstellen. Darüber hinaus kann zumindest eine Fritte der vorliegenden Erfindung mit einer weiteren niedrig schmelzenden Fritte kombiniert werden, die eine Zusammensetzung außerhalb des Umfangs der vorliegenden Erfindung hat. Dies wird dadurch begrenzt, daß die andere Fritte nicht die Qualitäten des resultierenden Emails stört.

Die Erfindung stellt Glas- (Keramik-) Emailzusammensetzungen zur Verfügung, in denen die oben beschriebenen Glasfrittenzusammensetzungen verwendet werden. Diese Zusammensetzungen weisen etwa 30 bis 95 Gew.-% Feststoffe einer Glasfrittenkomponente auf.

Die fein gemahlene Glasfritte kann mit einem gemischten Metalloxidpigment, jedem anderen Typ von Metallpulver, Metallvorstufe oder anderen Material der Wahl kombiniert werden. Typisch werden gemischte Metalloxidpigmente verwendet, um schwarze Farben in der Automobilindustrie zu erzeugen, welche Oxide von Kupfer, Chrom, Eisen, Cobalt, Nickel, Mangan und ähnliche umfassen. Obwohl diese schwarzen Spinellpigmente für die Verwendung in der Automobilindustrie bevorzugt werden, erzeugen andere Metalloxidpigmente verschiedene Farben, welche mit den Glasfrittenzusammensetzungen dieser Erfindung kombiniert werden können. Andere Endanwendungen können, und sind nicht hierauf begrenzt, Anwendungen in der Architektur und Getränkeindustrie umfassen. Die Pigment komponente umfaßt im allgemeinen 5 bis 40 Gew.-% der Glasfritte, abhängig vom gewünschten Bereich der Farbe, des Glanzes und der Opazität.

Verwendbare Pigmente sind in der Fachwelt bekannt und kommerziell erhaltlich. Beispiele sind unter anderem CuCr₂O₄, (Co, Fe)(Fe, Cr)₂O₄ und ähnliche. Beispielhaft sind Pigmente erhältlich von Cerdec Corporation wie *2991 Pigment, welches ein Kupferchromat(III)-Schwarzpigment ist, *2980 Pigment, welches ein Cobaltchromeisen-Schwarzpigment ist, und *2987-Pigment, welches ein Nickelmanganeisenchrom-Schwarzpigment ist.

Die erfindungsgemäße Emailzusammensetzung kann auch bis zu 15 Gew.-% Feststoffe enthalten, die im allgemeinen als Füllstoff verwendet werden, wie beispielsweise Siliciumdioxid und Aluminiumoxid, und andere herkömmliche Zusatzstoffe, wie beispielsweise Eisen, Silicon, Zink und ähnliche, um gewünschte Eigenschaften zu verstärken, wie beispielsweise Festigkeit gegen Silberdiffusion. Die Füllstoffe können auch ein wärmebeständiger Oxidfüllstoff, wie beispielsweise Wollastonit und Materialien, wie beispielsweise Aluminiumsilicatmaterialien, Calciumsilicatverbindungen, Boroaluminiumsilicatverbindungen, Natriumcalciumaluminiumsilicatverbindungen, Feldspatverbindungen, Titandioxid und Kombinationen dieser Oxide sein.

Die Emailzusammensetzungen können auch bis zu 20 Gew.-% Feststoffe eines Impfkristallmaterials, wie beispielsweise Bismutsilicat, enthalten, was im US-Patent Nr. 5 714 420 offenbart ist. Die Bismutsilicatimpfkristallmaterialien umfassen Bi₁₂SiO₂₀, Bi₄(SiO₄)₃ und Bi₂SiO₅, sind aber nicht hierauf beschränkt.

Der Einsatz der erwähnten Bismutsilicate in Kombination mit den hierin offenbarten Fritten kann dazu verwendet werden, Sperrstege auf Plasmadisplays zu bilden, welche einschmelzen, sintern und partiell kristallisieren und hierbei ihre Form erhalten ohne zu verformen.

Die Emailzusammensetzungen werden mit einem organischen Träger kombiniert, um eine auftragbare Emailpaste zu bilden.

Die Emailpaste enthält im allgemeinen etwa 85 bis etwa 60 Gew.-% Feststoffe, wie zuvor beschrieben, und etwa 15 bis etwa 40 Gew.-% eines geeigneten organischen Trägers. Die Viskosität der Paste wird so eingestellt, daß sie mit Siebdruck, Walzenbeschichtung oder Sprühen auf das gewünschte Substrat aufgetragen werden kann.

Der in der Paste eingesetzte Träger wird aufgrund seiner Endanwendung ausgewählt. Es ist wesentlich, daß der Träger adäquat in den Feststoffen suspendiert und vollständig beim Einbrennen aus der Paste auf dem Substrat ausbrennt. Träger sind typischerweise organischer Natur und umfassen Zusammensetzungen, die auf Kiefernharzen, Pflanzenölen, Mineralölen, Erdölfraktionen mit geringem Molekulargewicht, Tridecylalkoholen, synthetischen und natürlichen Harzen und ähnlichen basieren. Tenside und/oder andere filmbildende Modifikatoren können ebenfalls enthalten sein.

Entsprechend können UV-basierte Träger in der vorliegenden Erfindung verwendet werden. Diese UV-basierten Träger sind in der Fachwelt weithin bekannt und sind im allgemeinen aus polymerisierbaren Monomeren und/oder Oligomeren, die beispielsweise funktionelle Acrylat- oder Methacrylat-Gruppen enthalten, sowie Photoinitiatoren und Polymerisationsinhibitoren zusammengesetzt. Beispielhafte Systeme werden in den US-Patenten Nr. 4 306 012 und 4 649 062 offenbart. Es ist bekannt, daß diese Systeme mit Ultraviolettbestrahlung nach dem Auftragen auf dem Substrat gehärtet werden.

Der spezifische Träger und die eingesetzten Mengen werden aufgrund der spezifischen Komponenten der Paste und der gewunschten Viskosität ausgewählt. Im allgemeinen beträgt die Menge des Trägers etwa 15 bis etwa 40 Gew.-%, bezogen auf das Gesamtgewicht der Emailpaste.

Im allgemeinen sind die Emailpasten viskoser Natur, wobei die Viskosität vom eingesetzten Auftragungsverfahren und von der Endanwendung abhängig ist. Für Siebdruckzwecke sind Viskositäten geeignet, die von 10.000 bis 80.000 und vorzugsweise 35 bis 65 Pa.s (35.000 bis 65.000 Centipoise) bei 20 °C reichen, bestimmt auf einem Brookfield-Viskosimeter, Spindel # 7 bei 20 U/min.

Die Erfindung stellt auch ein Substrat mit einer hierauf eingebrannten, erfindungsgemäßen Emailpaste zur Verfügung. Solche Substrate sind beispielsweise Glas, Keramik oder andere nicht poröse Substrate, und vor allem Automobilglassubstrate. Andere Substrate umfassen Gläser für Fassaden, Vorrichtungen und Getränkebehälter. Insbesondere umfassen die Substrate Plasmabildschirmpaneele oder andere Flachbildschirme wie hierin zuvor erwähnt. Hinsichtlich der Letzteren wird auf die US-Patente Nr. 5 807 154, Nr. 5 085 334 und Nr. 5 136 207 verwiesen.

Um die erfindungsgemäßen Emailzusammensetzungen herzustellen, wird die notwendige Fritte oder Fritten zu einem feinen Pulver unter Verwendung herkömmlicher Verfahren gemahlen. Die Frittenkomponente wird anschließend mit den anderen Feststoffkomponenten kombiniert. Die Feststoffe werden anschließend mit dem notwendigen Träger gemischt, um die Emailpaste zu bilden. Die Viskosität wird wie gewünscht eingestellt.

Sobald die Emailpaste hergestellt ist, kann sie auf das Substrat auf herkömmliche Weise, wie beispielsweise durch Siebdruck, Abziehauftrag, Sprühen, Streichen, Walzenbeschichten und ähnliche aufgetragen werden. Siebdruck wird bevorzugt, wenn die Paste auf ein Glassubstrat aufgebracht wird. Nach Auftrag der Paste auf ein Substrat in gewünschter Art wird die aufgetragene Beschichtung eingebrannt, um das Email auf das Substrat zu binden. Die Einbrenntemperatur wird im allgemeinen durch die Garbrandtemperatur der Fritte (frit maturing temperature) bestimmt und liegt vorzugsweise in einem breiten Temperaturbereich. Typischerweise liegt die Einbrenntemperatur für eine erfindungsgemäße Zusammensetzung im Bereich von etwa 500 bis 750 °C, vorzugsweise im Bereich von etwa 520 bis 650 °C und ganz besonders bevorzugt etwa 530 bis 620 °C.

### Beispiele

Niedrig schmelzende Glasfrittenzusammensetzungen werden durch Zusammenmischen der Rohmaterialien, welche in der Fachwelt bekannt sind, unter Verwendung von dem Fachmann bekannten Verfahren hergestellt. Die gut gemischten Rohzusammensetzungen werden anschließend bei Temperaturen zwischen 1000 und 1300 °C geschmolzen, danach abgeschreckt, wiederum unter Verwendung von Verfahren, die dem Fachmann bekannt sind. Die Glaszusammensetzungen werden anschließend auf eine kleine Partikelgröße gemahlen, vorzugsweise zwischen 2 und 6 Mikron unter Verwendung einer Kugelmühle. Die fein gemahlenen Pulverfritten werden anschließend verwendet, um Glasemailzusammensetzungen zu bilden.

Die feingemahlene Glasfritte wird mit einem gemischten Metalloxidpigment kombiniert, falls eine gefärbte Emailzusammensetzung gewünscht wird.

Darüber hinaus werden die Festkörper der Emailzusammensetzungen in einem gemäß der Endanwendung ausgewählten Träger dispergiert und suspendiert, um eine Emailpaste zu bilden.

Die Untersuchung wurde durchgeführt, indem die Glasfritte oder Emailzusammensetzung mit einem auf Kiefernöl basierten Träger kombiniert wurde, wobei die resultierende Frittenoder Emailpaste auf einem Objektträger oder Autoglassubstrat mit Siebdruck aufgetragen wurde. Die Objektträger oder Automobilglassubstrate werden anschließend bei verschiedenen Temperaturen gebrannt, um die Einbrenntemperatur" (firing temperature, FT) oder minimale Einbrenntemperatur" (minimum firing temperature, MF) zu bestimmen. Die FT ist die Temperatur, bei der das Glas eine genügende Zeit zum Fließen und zum Einschmelzen innerhalb eines 15-minütigen Einbrennens hat und zu einer glänzenden, glatten Oberfläche führt. Die MF ist die Temperatur, bei der das Email eine genügende Zeit zum Fließen und zum Einschmelzen bei einem 4-minütigen Einbrennen hat und zu einem Email ohne verbundene Porosität (interconnected porosity) führt. Die Vorwärmzeit beträgt 10 bzw. 6 Minuten bei 427 °C für FT bzw. MF.

Die Säurefestigkeit wird gemäß ASTM C-724-91 bestimmt, wobei eine 10 gew.-%ige Zitronensäurelösung verwendet wird. Eingebrannte Proben werden für 15 Minuten der Lösung ausgesetzt und gemäß dem folgenden bewertet:
- Grad 1 -: Keine ersichtliche Ätzung
- Grad 2 -: Farbspielerscheinungen oder sichtbare Färbung auf der ausgesetzten Oberfläche, wenn unter einem Winkel von 45° betrachtet wird, aber nicht sichtbar, wenn die Betrachtung aus einem Winkel < 30° vorgenommen wird.
- Grad 3 -: Eine eindeutige Färbung, welche reflektierte Bilder nicht verschwimmen läßt und die auch bei Winkeln < 30° sichtbar ist.
- Grad 4 -: Eindeutige Färbung mit einer starken Farbänderung oder stark schillernder Oberfläche, die bei Winkeln < 30° sichtbar ist und bei der reflektierte Bilder verschwommen dargestellt werden.
- Grad 5 -: Glanzlose Oberfläche oder Mattierungen mit möglichem kalkigen Belag.
- Grad 6 -: Deutliche Entfernung von Email mit offensichtlicher Porenbildung.
- Grad 7 -: Vollständige Entfernung des Emails auf der behandelten Fläche.

Der thermische Ausdehnungskoeffizient (α_{25-325°C}) wird von 25 bis 325 °C unter Verwendung eines Dilatometers gemessen.

| Glasfrittenformulierung (Gew.-%) | | | | | |
|---|---|---|---|---|---|
| Komponente | *Bsp. 1 | *Bsp. 2 | *Bsp. 3 | *Bsp. 4 | *Bsp. 5 |
| Bi₂O₃ | 72,5 | 66,0 | 69,5 | 71,2 | 73,0 |
| SiO₂ | 13,0 | 15,0 | 11,0 | 15,0 | 11,0 |
| B₂O₃ | 3,5 | 5,7 | 8,0 | 5,7 | 8,0 |
| Al₂O₃ | 3,0 | 5,2 | 8,0 | 8,0 | 8,0 |
| ZnO | 8,0 | 8,0 | 3,5 | 0 | 0 |
| | | | | | |
| | | | | | |
| Einbrenntemp. (°C) | 550 | 575 | 565 | 600 | 570 |
| Säureresistenz ASTM C-724-91 | 1 | 2 | 3 | 1 | 2 |
| α_{25-325°C}x10⁻⁷ /°C | 75 | 68 | 73 | 68 | 72 |

| | | | | | |
|---|---|---|---|---|---|
| * Vergleichsbeispiel | | | | | |

| Glasfrittenformulierung (Gew.-%) | | | | | |
|---|---|---|---|---|---|
| Komponente | *Bsp. 6 | *Bsp. 7 | *Bsp. 8 | *Bsp. 9 | *Bsp. 10 |
| Bi₂O₃ | 78,9 | 84,6 | 76,7 | 86,4 | 67,7 |
| SiO₂ | 11,3 | 5, 9 | 12,0 | 6, 7 | 11,0 |
| B₂O₃ | 3,6 | 4,4 | 5,2 | 4,2 | 5,2 |
| Al₂O₃ | 6,2 | 4,4 | 6,1 | 0 | 8,0 |
| ZnO | 0 | 0,6 | 0 | 2,7 | 8,0 |
| | | | | | |
| | | | | | |
| Einbrenntemp. (°C) | 545 | 530 | 565 | 525 | 565 |
| Säureresistenz ASTM C-724-91 | 2 | 3 | 3 | - | 3 |
| α_{25-325°C}x10⁻⁷ /°C | 83 | 89 | 80 | 73 | 74 |

| | | | | | |
|---|---|---|---|---|---|
| * Vergleichsbeispiel | | | | | |

| Glasfrittenformulierung (Gew.-%) | | | | |
|---|---|---|---|---|
| Komponente | Bsp. 11 | Bsp. 12 | Bsp. 13 | Bsp. 14 |
| Bi₂O₃ | 79,3 | 78,1 | 76,8 | 75,3 |
| SiO₂ | 9, 0 | 8,8 | 9, 7 | 9, 6 |
| B₂O₃ | 8, 5 | 8, 3 | 7, 9 | 7, 8 |
| Al₂O₃ | 2,0 | 1,5 | 2,3 | 3,1 |
| ZrO₂ | 0,7 | 0,7 | 0,7 | 0,7 |
| ZnO | 0 | 0 | 0,3 | 0,3 |
| TiO₂ | 0 | 0 | 0,4 | 0, 4 |
| CaO | 0 | 2,1 | 0 | 0 |
| MgO | 0 | 0 | 0,2 | 0,2 |
| SrO | 0 | 0 | 0, 6 | 0, 5 |
| F⁻¹ | 0,5 | 0,5 | 1,1 | 2,1 |
| | | | | |
| Einbrenntemp. (°C) | 525 | 535 | 535 | 555 |
| Säureresistenz ASTM C-724-91 | 2 | 2 | 1 | 1 |
| α_{25-325°C}x10⁻⁷/°C | 84 | 85 | 83 | 78 |

## Patentansprüche

1. Eine bleifreie, alkalimetallfreie Bismutborosilicatglaszusammensetzung bestehend im wesentlichen aus
| Komponente | Gewichtsprozent |
|---|---|
| Bi₂O₃ | 50-90 |
| SiO₂ | 5-20 |
| B₂O₃ | 2-9 |
| Al₂O₃ | 0,1-10 |
| TiO₂ | 0-8 |
| ZnO | 0-9 |
| ZrO₂ | 0-10 |
| F⁻¹ | 0-4 |
| SrO | bis zu 10 |
| CaO | bis zu 7 |
| MgO | bis zu 7 |
| CeO | bis zu 10 |
| MnO | bis zu 10 |
| SnO | bis zu 10 |
| P₂O₅ | bis zu 7 |
| Sb₂O₃ | bis zu 10 |
| Fe₂O₃ | bis zu 10 |
| Nb₂O₅ | bis zu 10. |

2. Glaszusammensetzung, gemäß Anspruch 1, bestehend im wesentlichen aus
| Komponente | Gewichtsprozent |
|---|---|
| Bi₂O₃ | 67-84 |
| SiO₂ | 6-17 |
| B₂O₃ | 3-9 |
| Al₂O₃ | 1-9 |
| TiO₂ | 0-3 |
| ZnO | 0-8 |
| ZrO₂ | 0,1-7 |
| F⁻¹ | 0-3. |

3. Glaszusammensetzung, gemäß Anspruch 1, bestehend im wesentlichen aus
| Komponente | Gewichtsprozent |
|---|---|
| Bi₂O₃ | 68-84 |
| SiO₂ | 7-14 |
| B₂O₃ | 3,5-8,7 |
| Al₂O₃ | 1-8 |
| TiO₂ | 0-2 |
| ZnO | 0-6 |
| ZrO₂ | 0,5-3 |
| F⁻¹ | 0-2. |

4. Glaszusammensetzung, gemäß Anspruch 1, bestehend im wesentlichen aus
| Komponente | Gewichtsprozent |
|---|---|
| Bi₂O₃ | 78-88 |
| SiO₂ | 6,5-11 |
| B₂O₃ | 4-8,5 |
| Al₂O₃ | 0,1-7 |
| TiO₂ | 0-2 |
| ZnO | 0-6 |
| ZrO₂ | 0-3 |
| F⁻¹ | 0-2. |

5. Glaszusammensetzung gemäß Anspruch 1,
**dadurch gekennzeichnet,**
**daß** der Fluorgehalt 0,5 bis 2,1 Gew.-% beträgt.

6. Eine Glasfritte, hergestellt aus einer bleifreien, alkalimetallfreien Bismutborosilicatglaszusammensetzung gemäß den vorhergehenden Ansprüchen.

7. Eine Glasemailpaste, welche eine Glasfrittenkomponente, eine oxidische Pigmentkomponente und einen organischen Träger aufweist, wobei die Verbesserung durch die Glasfrittenkomponente gegeben ist, welche zumindest eine Glasfritte aufweist, die aus einer bleifreien, alkalimetallfreien Bismutborosilicatglaszusammensetzung gemäß den Ansprüchen 1 bis 5 besteht.

8. Glasemailpaste gemäß Anspruch 7,
**dadurch gekennzeichnet,**
**daß** der Feststoffgehalt etwa 85 bis 60 Gew.-% beträgt.

9. Glasemailpaste gemäß Anspruch 7 oder 8,
**dadurch gekennzeichnet,**
**daß** die Glasfrittenkomponente zumindest eine weitere Glasfritte enthält, die bei niedriger Temperatur schmilzt.

10. Glasemailpaste gemäß Anspruch 7, 8 oder 9, welche auch bis zu 20 Gew.-% Feststoffe eines Impfkristallmaterials aufweist.

11. Glasemailpaste gemäß Anspruch 10,
**dadurch gekennzeichnet,**
**daß** das Impfkristallmaterial ein Bismutsilicat ist.

12. Ein nicht poröses Substrat mit einer hierauf eingebrannten Glasemailpaste, wie in Anspruch 7 beschrieben.

13. Ein Substrat gemäß Anspruch 12, welches ein Automobilglas ist.

14. Ein Substrat gemäß Anspruch 12, welches ein Plasmabildschirm oder ein anderer Flachbildschirm ist.

## Claims

1. A lead-free, alkali metal-free bismuth borosilicate glass composition substantially consisting of
| Component | Percent by weight |
|---|---|
| Bi₂O₃ | 50-90 |
| SiO₂ | 5-20 |
| B₂O₃ | 2-9 |
| Al₂O₃ | 0.1-10 |
| TiO₂ | 0-8 |
| ZnO | 0-9 |
| ZrO₂ | 0-10 |
| F⁻¹ | 0.2-4 |
| SrO | up to 10 |
| CaO | up to 7 |
| MgO | up to 7 |
| CeO, | up to 10 |
| MnO | up to 10 |
| SnO | up to 10 |
| P₂O₅ | up to 7 |
| Sb₂O₃ | up to 10 |
| Fe₂O₃ | up to 10 |
| Nb₂O₅ | up to 10 |

2. Glass composition according to Claim 1 substantially consisting of
| Component | Percent by weight |
|---|---|
| Bi₂O₃ | 67-84 |
| SiO₂ | 6-17 |
| B₂O₃ | 3-9 |
| Al₂O₃ | 1-9 |
| TiO₂ | 0-3 |
| ZnO | 0-8 |
| ZrO₂ | 0.1-7 |
| F⁻¹ | 0.2-3 |

3. Glass composition according to Claim 1 substantially consisting of
| Component | Percent by weight |
|---|---|
| Bi₂O₃ | 68-84 |
| SiO₂ | 7-14 |
| B₂O₃ | 3.5-8.7 |
| Al₂O₃ | 1-8 |
| TiO₂ | 0-2 |
| ZnO | 0-6 |
| ZrO₂ | 0.5-3 |
| F⁻¹ | 0.2-2 |

4. Glass composition according to Claim 1 substantially consisting of
| Component | Percent by weight |
|---|---|
| Bi₂O₃ | 78-88 |
| SiO₂ | 6.5-11 |
| B₂O₃ | 4-8.5 |
| Al₂O₃ | 0.1-7 |
| TiO₂ | 0-2 |
| ZnO | 0-6 |
| ZrO₂ | 0-3 |
| F⁻¹ | 0.2-2 |

5. Glass composition according to Claim 1, **characterized in that** the fluorine content is 0.5 to 2.1 wt.%.

6. A glass frit produced from a lead-free, alkali metal-free bismuth borosilicate glass composition according to the preceding claims.

7. A vitreous enamel paste containing a glass frit component, an oxidic pigment component and an organic carrier, an improvement being brought by a glass frit component that contains at least one glass frit consisting of a lead-free, alkali metal-free bismuth borosilicate glass composition according to Claims 1 to 5.

8. Vitreous enamel paste according to Claim 7, **characterized in that** the solids content is about 85 to 60 wt.%.

9. Vitreous enamel paste according to Claim 7 or 8, **characterized in that** the glass frit component contains at least one other glass frit that melts at low temperature.

10. Vitreous enamel paste according to Claim 7, 8 or 9 which also contains up to 20 wt.%, based on solids, of a seed crystal material.

11. Vitreous enamel paste according to Claim 10, **characterized in that** the seed crystal material is a bismuth silicate.

12. A non-porous substrate with a stoved-on vitreous enamel paste as described in Claim 7.

13. A substrate according to Claim 12 which is an automotive glass.

14. A substrate according to Claim 12 which is a plasma screen or other flat screen.

## Revendications

1. Composition de verre au borosilicate de bismuth exempte de métaux alcalins et exempte de plomb, principalement composée de
| Composant | Pour cent en poids |
|---|---|
| Bi₂O₃ | 50 à 90 |
| SiO₂ | 5 à 20 |
| B₂O₃ | 2 à 9 |
| Al₂O₃ | 0,1 à 10 |
| TiO₂ | 0 à 8 |
| ZnO | 0 à 9 |
| ZrO₂ | 0 à 10 |
| F⁻¹ | 0,2 à 4 |
| SrO | jusqu'à 10 |
| CaO | jusqu'à 7 |
| MgO | jusqu'à 7 |
| CeO | jusqu'à 10 |
| MnO | jusqu'à 10 |
| SnO | jusqu'à 10 |
| P₂O₅ | jusqu'à 7 |
| Sb₂O₃ | jusqu'à 10 |
| Fe₂O₃ | jusqu'à 10 |
| Nb₂O₅ | jusqu'à 10. |

2. Composition de verre selon la revendication 1, principalement composée de
| Composant | Pour cent en poids |
|---|---|
| Bi₂O₃ | 67 à 84 |
| SiO₂ | 6 à 17 |
| B₂O₃ | 3 à 9 |
| Al₂O₃ | 1 à 9 |
| TiO₂ | 0 à 3 |
| ZnO | 0 à 8 |
| ZrO₂ | 0,1 à 7 |
| F⁻¹ | 0,2 à 3. |

3. Composition de verre selon la revendication 1, principalement composée de
| Composant | Pour cent en poids |
|---|---|
| Bi₂O₃ | 68 à 84 |
| SiO₂ | 7 à 14 |
| B₂O₃ | 3,5 à 8,7 |
| Al₂O₃ | 1 à 8 |
| TiO₂ | 0 à 2 |
| ZnO | 0 à 6 |
| ZrO₂ | 0,5 à 3 |
| F⁻¹ | 0,2 à 2. |

4. Composition de verre selon la revendication 1, principalement composée de
| Composant | Pour cent en poids |
|---|---|
| Bi₂O₃ | 78 à 88 |
| SiO₂ | 6,5 à 11 |
| B₂O₃ | 4 à 8,5 |
| Al₂O₃ | 0,1 à 7 |
| TiO₂ | 0 à 2 |
| ZnO | 0 à 6 |
| ZrO₂ | 0 à 3 |
| F⁻¹ | 0,2 à 2. |

5. Composition de verre selon la revendication 1, **caractérisée en ce que** la teneur en fluor va de 0,5% à 2,1% en poids.

6. Fritte de verre, produite à partir d'une composition de verre au borosilicate de bismuth exempte de métaux alcalins et exempte de plomb selon les revendications précédentes.

7. Pâte d'émail vitrifié, laquelle présente un composant de fritte de verre, un composant de pigment contenant un oxyde et un support organique, l'amélioration étant conférée par le composant de fritte de verre, lequel présente au moins une fritte de verre constituée d'une composition de verre au borosilicate de bismuth exempte de métaux alcalins et exempte de plomb selon les revendications 1 à 5.

8. Pâte d'émail vitrifié selon la revendication 7, **caractérisée en ce que** la teneur en matières solides va d'environ 85% à 60% en poids.

9. Pâte d'émail vitrifié selon la revendication 7 ou 8, **caractérisée en ce que** le composant de fritte de verre contient au moins un autre fritte de verre qui fond à basse température.

10. Pâte d'émail vitrifié selon la revendication 7, 8 ou 9, laquelle présente également jusqu'à 20% en poids de matières solides d'un matériau de germe cristallin.

11. Pâte d'émail vitrifié selon la revendication 10, **caractérisée en ce que** le matériau de germe cristallin est un silicate de bismuth.

12. Substrat non poreux sur lequel a été cuite une pâte d'émail vitrifié telle que décrite dans la revendication 7.

13. Substrat selon la revendication 12 qui est un verre automobile.

14. Substrat selon la revendication 12 qui est un écran plasma ou un autre écran plat.
